# EUROPÄISCHE PATENTSCHRIFT

(11) **EP 1 980 767 B1**
(45) Veröffentlichungstag und Bekanntmachung des Hinweises auf die Patenterteilung: **23.10.2019**
(21) Anmeldenummer: 08154319.1
(22) Anmeldetag: 10.04.2008
(51) Int. Cl.: F16D 48/02, F15B 13/02

(54) **Hydraulische Steuerungseinrichtung für Lastschaltgetriebe mit einer Vorrichtung zur Verkürzung der Schaltzeiten**
Hydraulic control device for power shift transmissions with a device for reducing shift times
Dispositif de commande hydraulique pour boîtes de vitesse doté d'un dispositif destiné à raccourcir les rapports

(30) Priorität: 12.04.2007 DE 102007017177
(43) Veröffentlichungstag der Anmeldung: 15.10.2008
(73) Patentinhaber: ZF Friedrichshafen AG, 88046 Friedrichshafen (DE)
(72) Erfinder: Bohner, Ulrich, 88690 Unteruhldingen (DE); Neubecker, Harald, 88046 Friedrichshafen (DE)

(56) Entgegenhaltungen:
- DE-A1- 3 131 420
- GB-A- 823 848

## Beschreibung

Die Erfindung betrifft eine hydraulische Steuerungseinrichtung für ein Lastschaltgetriebe, insbesondere für einen Schiffsantrieb, welche ein Drucksteuerventil zur Regelung eines Druckaufbaus in einem Kupplungszylinder einer hydraulisch betätigten Kupplung, sowie eine Einrichtung zur Verkürzung der Befülldauer der hydraulisch zu betätigenden Kupplungen oder Bremsen aufweist.

Zum sicheren und komfortablen Schalten einer hydraulischen Kupplung darf der Druck bei einem Zuschalten einer Kupplung nicht unstetig und steil in dieser hochschnellen, da dies mit Drehmomentstößen, und den daraus resultierenden hohen mechanischen Belastungen und Komforteinbussen, verbunden ist. Vielmehr muss sich der Druckaufbau in dem Kupplungszylinder in einer zeitlich stetig ansteigenden Druckrampe vollziehen. Die Regelung dieser Druckrampe wird nachfolgend auch als Modulation bezeichnet.

Eine Einrichtung zur Steuerung und Regelung des Schaltvorganges einer hydraulischen Kupplung ist in der Offenlegungsschrift DE 2120545 A1 offenbart. Diese Einrichtung, nachfolgend Drucksteuerventil genannt, besteht aus einem Regel- und einem Modulationskolben, die beide in einer konzentrischen Bohrung verschiebbar angeordnet sind und von einer Feder auseinander gedrückt werden. Zu Beginn des Schaltvorganges sind die beiden Kolben gegen ihre Anschläge durch die Feder maximal weit auseinandergedrückt, so dass die Vorspannkraft der Feder ihren kleinsten Wert in dieser Anordnung einnimmt. Jeweils ein Raum auf der Stirnseite jedes Kolbens ist mit dem Kupplungsdruck als Rückmeldung verbunden. Das Drucksteuerventil wirkt als Druckbegrenzungsventil mit variablem Druck. Der durch das Regelventil eingestellte Kupplungsdruck ergibt sich aus der Vorspannkraft der Feder, dividiert durch die vom Regeldruck beaufschlagte Kolbenfläche. Die Vorspannkraft der Feder und damit der Druck am Regelkolben wird durch den Weg des Modulationskolbens bestimmt. In Ausgangslage hat die Feder eine bestimmte geringe Vorspannung. Diese entspricht dem Anfangsdruck zum Beginn des Schaltvorgangs. Ein geringer Regeldruck bedeutet auch einen entsprechend geringen Volumenstrom, der aus dem Regelventil strömt und die zu Beginn des Schaltvorganges drucklosen und teilweise entleerten Volumina der Zuleitungen und Kupplungszylinder füllen muss. Durch die nach der Befüllung der Volumina über eine Blende verzögerte Druckbeaufschlagung des Modulationskolben bewegt sich dieser langsam in Richtung des Regelkolbens und erhöht dadurch die Vorspannkraft der Feder, und damit den Kupplungsdruck über der Zeit, so dass eine modulierte Druckrampe entsteht.
Da der Kupplungsdruck von seinem niedrigen Ausgangswert an langsam und stetig hoch geregelt wird, dauert es relativ lange bis der Kupplungszylinder befüllt ist und in diesem der Druckaufbau die Kraftübertragung bewirkt. Diese Befüllzeit verursacht einen Zeitverzug zwischen einem Schaltbefehl zum Einlegen einer Fahrtstellung und einer spürbaren Reaktion des Getriebes. Bei Schiffsgetrieben ist ein langer Zeitverzug zwischen Schaltbefehl und Reaktion des Schiffes in Form einer Propellerdrehung von Nachteil, da bei einem Wendevorgang das Schiff möglichst unverzüglich Schub in die entgegen gesetzte Richtung aufbauen soll, um beispielsweise beim Anlegen eine Kollision mit dem Anlegesteg zu vermeiden.

Aus der Patentschrift WO 95/29350 ist ein Drucksteuerventil bekannt, welcher dem besagten Zeitverzug durch eine schnellere Befüllung mittels eines elektronisch gesteuerten Magnetventils entgegenwirkt. Hierbei werden zu Beginn der Schaltung die beiden Kolben, zusätzlich zur Federkraft, durch eine über das Magnetventil geschaltete Druckbeaufschlagung des Federraums auseinandergedrückt und der Regelkolben an einer Abregelung des Förderstromes in einen Schmierkreis oder Ölsumpf gehindert, so dass der gesamte Förderstrom der Pumpe in die drucklosen Volumina der Kupplungszylinder und deren Zuleitungen strömt und damit der Befüllungsvorgang stark verkürzt wird. Darüber hinaus wird bei dieser Lösung durch die elektronische Ansteuerung eine hohe Flexibilität in Form von unterschiedlichen, dem Einsatzfall angepassten Befüllzeiten erreicht. Damit ist es möglich, die aufgrund der erhöhten Viskosität bei Tieftemperaturen niedrige Befüllgeschwindigkeit durch verlängerte Befüllzeiten so anzupassen, dass die Kupplungs- und Leitungsvolumina vollständig gefüllt werden, andererseits aber bei hohen Temperaturen die kürzest möglichen Füllzeiten zu programmieren. Allerdings ist zum Erreichen der hohen Funktionalität ein gewisser Aufwand erforderlich, verursacht durch das Magnetventil selbst und dessen Ansteuerung, was zusätzlich Gewicht, Bauraum und Kosten bedeutet.

Die in US 4,086,994 beschriebene Lösung zeigt ein Drucksteuerventil, das ebenfalls aus einem Steuer- und einem Modulationsventil aufgebaut ist, die konzentrisch in einer Bohrung angeordnet sind und die von jeweils einer Feder in entgegen gesetzte Richtungen vorgespannt werden. Vor der Schaltung werden das Regelventil und der zweite Kolben von ihren jeweiligen Federn in deren Anschlagpositionen gedrückt, da die Kolbenstirnseiten drucklos sind. In dieser Position ist das Regelventil voll geöffnet wodurch keine Abregelung des Systemdrucks stattfindet. Nach dem Betätigen eines manuellen Schaltventils fließt zunächst der volle Volumenstrom in den Kupplungszylinder und befüllt diesen, worauf der Druck in dem Kupplungszylinder ansteigt. Durch eine Verbindung der Kupplungsseite mit der Steuerkolbenstirnfläche über eine Drossel steigt der Druck auf den Kolben verzögert an, wodurch der Regelvorgang deutlich später einsetzt und der Kupplungszylinder nun schon vorbefüllt ist. Eine weitere Ausgestaltung erreicht die notwendige Verzögerung zur Schnellbefüllung durch einen separaten Verzögerungskolben, der vom Kupplungsdruck zunächst gegen eine Feder ausgelenkt wird und ab einem bestimmten Hub, der einem bestimmten Druck entspricht, eine Leitung zu den beiden Kolbenstirnseiten öffnet, wodurch der Modulationsvorgang eingeleitet wird. Nachteile dieser Lösung sind der separate Verzögerungskolben und dessen zusätzliche Feder in Form zusätzlicher Bauteile sowie der beanspruchte Bauraum und die erforderliche Bearbeitung des Steuergehäuses.

Schließlich wird in der Offenlegungsschrift DE 3131420A1 eine hydraulische Steuerungseinrichtung mit einem in einem Steuergehäuse angeordneten Drucksteuerventil zur raschen Befüllung eines Kupplungszylinders und der Regelung des Druckaufbaus in dem Kupplungszylinder offenbart. Regel- und Modulationskolben werden durch mindestens eine Feder in einem Ausgangszustand in ihre jeweiligen Anschlagspositionen auseinander gedrückt, wobei zwischen der Stirnseite des Regelkolbens und der Kupplungsseite eine Verzögerungseinrichtung angeordnet ist. Diese Verzögerungseinrichtung besteht aus Blenden, welche die Druckbeaufschlagung der Stirnseite des Regel- und Steuerkolbens und damit die Modulation des Kupplungsdruckes hinauszögern. In einer weiteren Ausgestaltung gehört zur Verzögerungseinrichtung ein Schieberventil, nachfolgend als Verzögerungskolben bezeichnet, welcher von einer Feder vorgespannt ist und direkt vom Druck des Kupplungszylinders beaufschlagt wird. Der Verzögerungskolben versperrt die Verbindung über die der Kupplungsdruck die Stirnseite des Regelkolbens beaufschlagen kann. Hierdurch wird die Regelung unterdrückt d. h. das Regelventil bleibt voll geöffnet und damit auch die Verbindung von der Pumpe zum Kupplungszylinder. Dies bedeutet, dass der maximale Förderstrom dem Kupplungszylinder zufließen kann und nur auf den Höchstdruck im hydraulischen System, den über ein Druckbegrenzungsventil fest eingestellten Systemdruck, begrenzt ist. Nach der schnellen Befüllung des Kupplungszylinders steigt der Druck in dieser an und bewegt den Verzögerungskolben so weit, dass der Kupplungsdruck die Stirnseite des Regelventils beaufschlagen kann, womit die Modulation beginnt. Nachteilig sind hierbei die zusätzlichen Bauteile des Verzögerungskolbens und dessen Platzbedarf in der Steuerungseinrichtung sowie die notwendige Bearbeitung des Steuerungsgehäuses. Zudem ist bei der ersten Ausführungsform dieser Anordnung problematisch, dass die Verzögerungszeit nur begrenzt einstellbar ist. Wegen des verhältnismäßig kleinen Verschiebevolumens des Regelkolbens bei kleinem Weg muss die Blendenbohrung sehr klein gewählt werden, um eine der Füllzeit entsprechende Verzögerungszeit zu erreichen. Da der Fluidstrom durch die Blende sofort beginnt, bewegt sich der Regelkolben sofort kontinuierlich in Richtung Regelstellung, was bedeutet, dass der Fluidstrom kontinuierlich stärker gedrosselt wird. Es wird sich deshalb kein Umschaltpunkt ergeben, bis zu dem der Fluidstrom ungedrosselt bleibt. Schließlich hat die Blende bei dieser Anordnung eine Doppelfunktion, sie muss als Dämpfungsblende zur Schwingungsdämpfung dienen und gleichzeitig als Verzögerungsblende für die Schnellbefüllung. Damit besteht ein Zielkonflikt für die Auslegung der Blendengröße. Unter Umständen ergibt die Auslegung der Blendengröße auf optimale Schwingungsdämpfung eine Verzögerungszeit, die nicht zu der Füllzeit des Kupplungszylinders passt. Zudem ist der Durchflusswiderstand der Blenden - oder Drosselstellen - stark von der Viskosität des Arbeitsmediums abhängig, d. h. bei tiefen Temperaturen mit entsprechend hohen Viskositäten wird sich die Verzögerungszeit verlängern.

In einer weiteren Variante, die in dieser Schrift offenbart wird, gehört zur Verzögerungseinrichtung zusätzlich ein Verzögerungskolben, welcher sich direkt nach dem Drucksteuerventil hinter einer Blende befindet und mit dem Druckanstieg während der Schnellbefüllung aus seiner Ausgangslage gegen eine Feder ausgelenkt wird, bis der Kolben eine Gehäuseöffnung freigibt, durch die der etwas abgedrosselte Kupplungsdruck das Steuerventil beaufschlagen kann, wodurch dieses den Kupplungsdruck abregelt und damit die Schnellbefüllung beendet, bzw. die Regelung des Druckanstieges zum Gangwechsel einleitet.

Schließlich beschreibt auch die GB 823848 A eine hydraulische Steuerungseinrichtung gemäß dem Oberbegriff von Anspruch 1.

Die der Erfindung zugrunde liegende Aufgabe ist es, eine hydraulische Steuerungseinrichtung für ein Lastschaltgetriebe so zu verbessern, dass auf einfache Weise, insbesondere für Anwendungen, bei denen eine elektronisch über Magnetventile gesteuerte Lösung zu aufwändig wäre, eine robuste und kostengünstige Lösung bei kleinerem Bauraum für eine Schnellbefüllung dargestellt werden kann. Ferner soll die Steuerung an weiten Temperaturbereich anpassbar sein.

Diese Aufgabe wird durch die Merkmale des Patentanspruches 1 gelöst. Hierbei ist in einer hydraulischen Steuereinrichtung in einem Steuergehäuse ein Drucksteuerventil angeordnet, welches die rasche Befüllung mindestens eines Kupplungszylinders ermöglicht sowie den darauf folgenden Druckaufbau im Kupplungszylinder regelt. Das Drucksteuerventil weist einen Regel- und einen Modulationskolben auf, die in konzentrischen Bohrungen angeordnet sind und durch ein elastisches Glied in einer ersten Ausgangslage gegen ihre jeweiligen Anschläge auseinander gedrückt werden. Weiterhin ist zwischen einem stirnseitigen Raum des Regelkolbens und einem Anschluss des Modulationskolbens, welcher mit einer Regelrückführung des Kupplungsdrucks verbunden ist, eine Verzögerungseinrichtung angeordnet, die zur schnelleren Befüllung eines Kupplungszylinders den Beginn der Regelphase durch den Regelkolben hinauszögert.

Erfindungsgemäß wird eine Steuergeometrie derart in den Modulationskolben eingearbeitet, dass dieser zusätzlich als Verzögerungskolben wirksam ist. Durch die in den Modulationskolben eingebrachte Steuergeometrie wird zu Beginn der Schaltung die Verbindung vom Kupplungsdruck auf die Stirnseite des Regelkolbens versperrt und der Raum auf der Stirnseite des Regelkolbens entlüftet. Hierdurch wird die Regelfunktion des Regelkolbens unterdrückt, d. h., das Regelventil bleibt voll geöffnet, so dass der volle Pumpenförderstrom ohne Druckreduzierung den zu schaltenden Kupplungszylinder und dessen Zuleitungen befüllt. Nach der Befüllphase gibt die Steuergeometrie des durch den Kupplungsdruckanstieg gegen die Feder bewegten Modulationskolbens die Regelfunktion frei. Die Drosselstellen in den Zuleitungen von Regel- und Modulationskolben verzögern zusätzlich den für den Regelbeginn erforderlichen Druckanstieg an dem Regelkolben. Durch die Vereinigung von zwei Funktionen in einem Bauteil, dem Modulationskolben, entfällt der Verzögerungskolben mit einer zugehörigen Feder. Darüber hinaus wird sowohl der für die beiden Teile erforderliche Bauraum als auch der Bearbeitungsvorgang zur Herstellung einer Ventilbohrung im Steuergehäuse eingespart.

Gemäß der Erfindung wird die Steuergeometrie in der Mantelfläche des Modulationskolbens, welche die Funktion eines Verzögerungskolbens erfüllt, durch Eindrehen von umlaufenden Nuten hergestellt. Hierdurch hat beispielsweise die Drehung des Kolbens im Betrieb keinen Einfluss keinen Einfluss auf die Lage der Steuerkante zu den zu öffnenden oder schließenden Leitungen bzw. Anschlüssen. Zudem gestaltet sich der Herstellungsprozess des Kolbens einfach.

In einer weiteren Ausgestaltung besteht über eine Leitung eine Verbindung zwischen dem kupplungsseitigen Ausgang des Kupplungsventils und dem Modulationskolben, bzw. weiter zu dem Regelkolben über den Modulationskolben, zur Regelrückführung. Der Druck in dem Zweig von dem kupplungsseitigen Ausgang des Kupplungsventils bis zu dem jeweiligen Kupplungszylinder wird nachstehend als Kupplungsdruck bezeichnet. Während der Schnellbefüllphase ist dieser aufgrund der Strömungsverluste im hydraulischen System geringer als der Systemdruck und steigt erst gegen Ende der Schnellbefüllung an, wenn der Füllstrom geringer wird. Erst durch diesen Anstieg wird die Regelung des Drucksteuerventils aktiviert und der Kupplungsdruck abgesenkt. Hierdurch wird das Ende der Schnellbefüllung sensiert und damit zum richtigen Zeitpunkt die Umschaltung von Schnellbefüllphase auf die Modulation ausgelöst. Somit ergibt sich eine optimale schnelle Befüllung und ein sanftes Anlegen des Kupplungskolbens an das Lamellenpaket, wodurch die Kupplung schnell aber ohne Schaltstoß schließt.

Eine besonders vorteilhafte Ausgestaltung betrifft die Drosselstellen in der Verzögerungseinrichtung, welche, dem Stand der Technik entsprechend, temperaturabhängig selbst verstellbar sind, beispielsweise durch Verwendung von Bimetallen oder Memory-Metallen als Drosselwerkstoff. Hierdurch kann der Durchflusswiderstand der Drosseln über der Temperatur konstant gehalten und der Einfluss der Temperatur auf die Qualität und Dauer des Schaltvorganges minimiert werden.

Die Verwendung der erfindungsgemäßen hydraulischen Steuereinrichtung, insbesondere in einem Schiffsgetriebe, ist sehr vorteilhaft, da in diesem Einsatzfall durch die Schnellbefüllung kurze Umschaltzeiten zwischen Vorwärts- und Rückwärtsfahrt, wie sie beispielsweise bei einem Anlegemanöver wichtig sind, ermöglicht werden.

Ein Ausführungsbeispiel der Erfindung ist in der Zeichnung dargestellt und wird im Folgenden näher beschrieben.

Es zeigen:
- Fig. 1: einen Hydraulikplan der gesamten Steuerungseinrichtung;

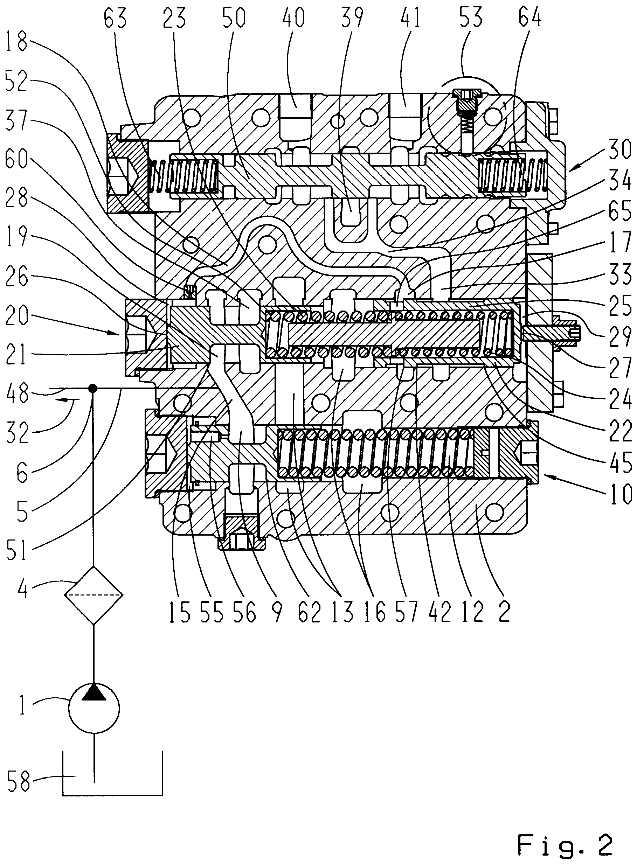

- Fig. 2: einen Schnitt durch das Gehäuse der Steuerungseinrichtung;
- Fig. 3: ein Diagramm mit dem zeitlichen Verlauf des Kupplungsdrucks und
- Fig. 4: einen Teilschnitt durch das Gehäuse der Steuerungseinrichtung im Bereich des Drucksteuerventils mit Darstellung der ersten Ausgangsposition.

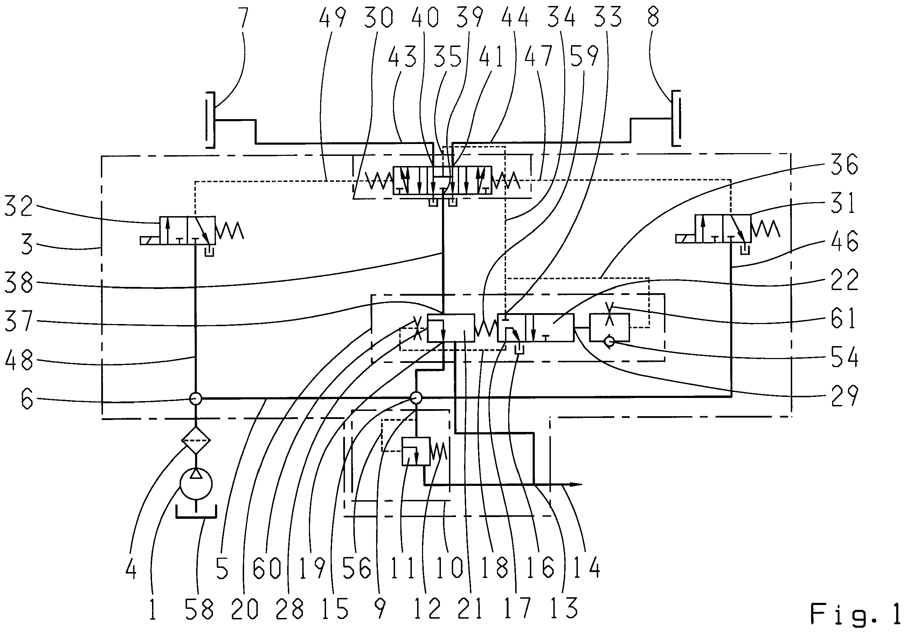

Das die Erfindung betreffende hydraulische System, wie in Fig.1 dargestellt, besteht aus einer Pumpe 1 mit einem Filter 4, einer hydraulischen Steuerung 3 und zwei Kupplungszylindern 7 und 8, wobei sich die hydraulische Steuerung 3 aus einem Systemdruckventil 10 zur Begrenzung des maximalen Systemdrucks, einem Drucksteuerventil 20 zur Reglung von Schnellbefüllung und Druckaufbau beim Schaltvorgang, einem Kupplungsventil 30 zur Anwahl des zu schaltenden Kupplungszylinders und zwei Magnetventilen 31 und 32 zur Betätigung des Kupplungsventils 30 zusammensetzt.

Die Pumpe saugt das Fluid aus dem Fluidsumpf im Getriebegehäuse an und fördert es durch einen Filter 4 und weiter über eine Leitung 5 zu einem Verbindungsraum 15, von wo das Fluid über einen Anschluss 9 zu einem Systemdruckventil 10, und über einen Anschluss 19 zu einem Drucksteuerventil 20 gelangt. Das Druckbegrenzungsventil besteht aus einem Kolben 11 und einer Feder 12, sowie dem Anschluss 9, einem stirnseitigen Druckraum 55 und einer eine Drosselstelle aufweisende Leitung 56, die den Anschluss 9 mit dem Druckraum 55 verbindet. Der Druck im Verbindungsraum 15 wird somit über Anschluss 9 und Leitung 56 in den Druckraum 55 geleitet, wo er den Kolben 11 stirnseitig belastet und gegen die Kraft der Feder 12 verschiebt, bis der Kolben 11 bei Erreichen eines durch die Steifigkeit der Feder 12 festgelegten Systemdrucks über eine Steuerkante 62 zu einem Sammelraum 13 öffnet, von wo aus das Fluid zu einem Getriebeschmiersystem 14 fließt. Hiermit ist der Druck im Verbindungsraum 15 bzw. dem gesamten hydraulischen System, nach oben auf den Wert des Systemdrucks begrenzt. Alle Steuerkanten der in diesem Ausführungsbeispiel genannten Schieberventilkolben sind durch das Eindrehen von Nuten in die zylindrische Mantelfläche hergestellt.

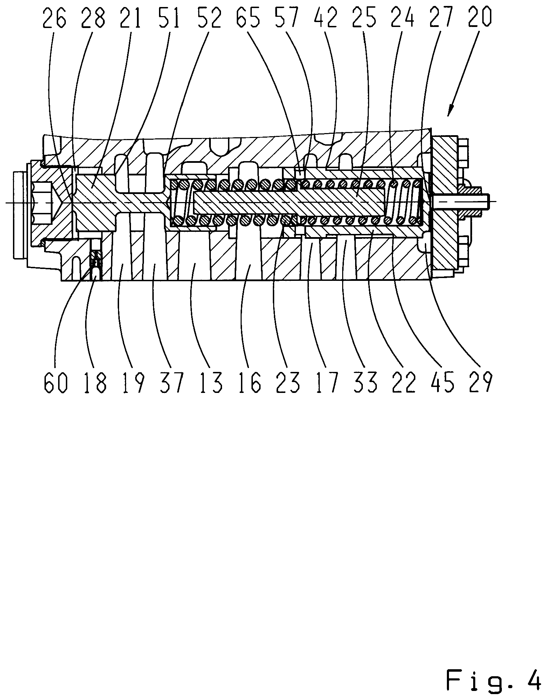

Das Drucksteuerventil 20 beinhaltet einen Regel- 21 und einen Modulationskolben 22, die beide in einer konzentrischen Bohrung in einem Steuerungsgehäuse 2 längsbeweglich angeordnet sind und von einem Federpaket 59, bestehend aus zwei in Reihe angeordneten Druckfedern 23 und 24 und einem Distanzstück 25, in einer ersten Ausgangslage (Fig. 4) gegen ihre jeweiligen Anschläge 26 und 27, in deren Bereich sich die zugehörigen Druckräume 28 und 29 an den Kolbenstirnseiten befinden, auseinandergedrückt werden. Der Anschlag 27 ist hierbei in seiner Position verstellbar und wird als Stellschraube ausgeführt. Damit ist es möglich, die Verzögerungszeit des Modulationskolbens und somit die Schnellbefüllzeit einzustellen. Wird beispielsweise die Stellschraube tiefer in das Steuerungsgehäuse 2 hineingedreht, so ist der Weg des Modulationskolbens 22 aus einer ersten Ausgangslage bis zu der Stellung, in der seine Steuerkante 57 den Druckraum 28 absperrt bzw. die Steuerkante 42 den Druckraum 28 über eine Leitung 18 mit Druck beaufschlagt, kürzer. Dies wirkt sich in einer geringeren Verzögerungszeit und damit einer kürzeren Schnellbefüllung aus. Hierdurch ist die hydraulische Steuervorrichtung vorteilhaft an verschiedene Getriebe, die sich in der Größe der Kupplungskolben unterscheiden, anpassbar. Diese erste Ausgangslage nimmt das Drucksteuerventil 20 in der Neutralposition der Steuerung ein, d.h. ein Kupplungsventilkolben 50 befindet sich von einer Feder 63 und einer Feder 64 zentriert in einer zusätzlich durch eine Rastierung 53 fixierten mittleren Stellung und zwei Magnetventile 31 und 32 sind entlüftet. Zwischen den Kolben 21 und 22 liegt im Steuerungsgehäuse 2 ein Entlüftungsanschluss 16. Ein im Bereich des Modulationskolbens 22 liegender Anschluss 17 ist über eine Leitung 18 mit dem stirnseitigen Druckraum 29 des Steuerkolbens verbunden. Ebenfalls besteht vom Modulationskolben 22 aus eine Verbindung zwischen einem Anschluss 33 über eine Leitung 34 mit dem Anschluss 35 des Kupplungsventils 30. Eine weitere Leitung 36 führt vom stirnseitigen Druckraum 29 des Modulationskolbens 22 ebenfalls zum Verbindungskanal 34. In der Leitung 36 befindet sich eine Drosselstelle 61 und in der Leitung 18 ist eine Drosselstelle 60 angeordnet. Der Raum 13 steht außer mit dem Systemdruckventil 10 auch mit dem Regelkolben 21 in Verbindung. Ein Anschluss 37 führt vom Regelkolben 21 über eine Leitung 38 zum Eingang 39 des Kupplungsventils 30, von wo aus das Fluid über einen Anschluss 40 und eine Leitung 43 zu dem Kupplungszylinder 7 oder über einen Anschluss 41 und eine Leitung 44 zu dem Kupplungszylinder 8 gelangen kann.

Befindet sich das Kupplungsventil 30 in Neutral-Position, wie in Fig.1 dargestellt von den Federn 63 und 64 in die Mittellage gedrückt, so ist das Drucksteuerventil 20 frei von Druckkrafteinwirkungen und die Kolben 21 und 22 nehmen unter der Vorspannkraft des Federpakets 59 die erste Ausgangslage ein (Fig.4). Die Anschlüsse 19 und 37 werden vom Regelkolben 21 nicht verdeckt und sind somit für den Förderstrom voll geöffnet, so dass in Neutralstellung am geschlossenen Eingang 39 des Kupplungsventils 30 der maximale Systemdruck ansteht.

Bei der Durchschaltung des Magnetventils 31, d.h. der Herstellung der Verbindung zwischen den Leitungen 46 und 47, wird unter Einwirkung des Systemdrucks, der über die Zweigstelle 6 und die Leitung 5 auf die Leitung 46, und damit die Leitung 47, übergeht, der Kupplungsventilkolben 50 nach so verschoben, dass der Eingang 39 mit Anschluss 41 verbunden ist und das vor Anschluss 39 aufgestaute Drucköl, ungedrosselt vom Regelkolben 21 und damit maximaler Füllgeschwindigkeit, in die bisher drucklose Leitung 44 und das Volumen der Kupplungszylinder 8 strömt. Durch das zusätzlich zur Verfügung stehende Volumen bricht der Systemdruck kurzzeitig ein.

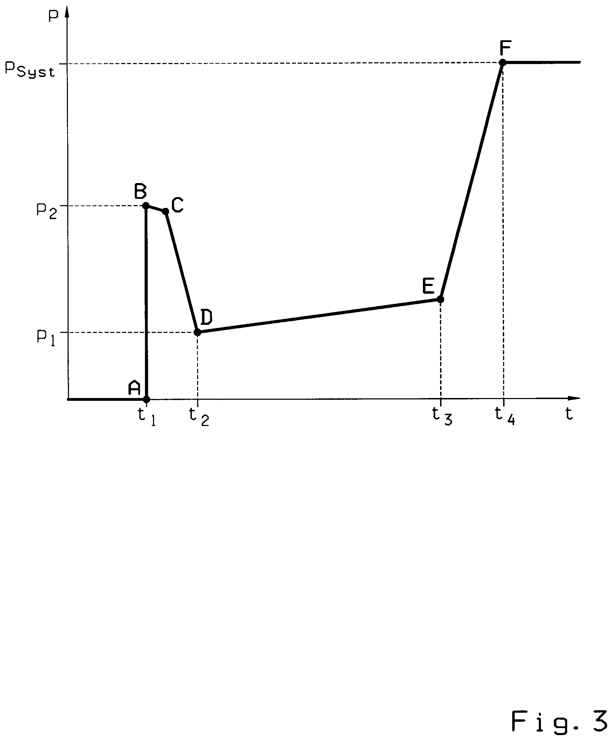

Nach der schnellen Befüllung des anfangs drucklosen Kupplungszylinder- und Leitungsvolumens steigt der Druck in dem Kupplungszylinder 8 sowie dessen Zuleitung 44 an, siehe die Strecke A-B in Fig.3, und erreicht die Höhe des eingebrochenen Systemdrucks abzüglich der Leitungsverluste (Punkt B, Fig. 3). Der Kupplungsdruck baut sich über die Leitungen 34 und 36, verzögert durch die Drosselstelle 61, auch im Druckraum 29 auf und bewegt den Modulationskolben 22 gegen das vorgespannte Federpaket 59. Da der Druckraum 28 am Regelkolben 21 noch über die Leitung 18 und eine Querbohrung 65 mit der Entlüftung 16 verbunden ist, bleibt der Regelkolben 21 an seinem Anschlag 26 womit dem Förderstrom weiterhin der volle Öffnungsquerschnitt zur Verfügung steht. Auf dem Kupplungsdruckniveau, das durch Punkt B in Fig. 3 dargestellt ist, wird das Lüftspiel in dem Kupplungszylinder 8 schnell reduziert. Während der Befüllung des Druckraumes 29 stagniert der Kupplungsdruck und sinkt danach leicht ab, wenn die Steuerkante 42 des Modulationskolbens 22 den zu diesem Zeitpunkt drucklosen Kanal 18 frei gibt und das mit Kupplungsdruck beaufschlagte Öl aus Leitung 34 über Kanal 18 und Drosselstelle 60 den Druckraum 28 befüllt, wie anhand der Strecke B-C in Fig.3 dargestellt ist. In Verbindung mit den in seiner Außenkontur eingedrehten Steuerkanten 42, 45 und 57 übernimmt der Modulationskolben 22 dabei die Funktion eines Verzögerungskolbens, da er den Steuerdruck erst dann in die Leitung 18 freigibt, nachdem er den Weg von seinem Anschlag 27 bis zum Überstreichen der Steuerkante 42 über den Anschluss 17 gegen die Federkraft zurückgelegt hat. Zudem ist zusätzlich der die Bewegung auslösende Druckaufbau in dem Druckraum 29 durch die Drosselstelle 61 in der Leitung 36 verzögert.

Der sich nach der Befüllung des Druckraumes 28 dort ansteigende Druck bewegt den Regelkolben 21 gegen das Federpaket 59, wodurch die Steuerkante 51 des Regelkolbens die Verbindung von 19 nach 37 verengt, bzw. die Steuerkante 52 den Druck über den Sammelraum 13 zur Getriebeschmierung 14 hin entlastet. Hierdurch fällt der Kupplungsdruck schnell ab, wie durch die Strecke C-D in Fig. 3 dargestellt, und wird vom Regelkolben 21 auf einen Wert eingeregelt, welcher der Vorspannkraft des Federpakets 59 entspricht. Der Kupplungsdruck in Punkt D in Fig. 3 ist der Anfangsdruck der Druckmodulationsrampe.

Aufgrund des größeren Durchmessers des Modulationskolbens 22 wird das Federpaket 59 immer weiter zusammengedrückt, wodurch der Druck über der Zeit stetig ansteigt, wie mit der Strecke D-E in Fig. 3 dargestellt ist. Nach Anliegen des Distanzstückes 25 am Modulationskolben 22 ist nur noch Feder 23 komprimierbar, was eine höhere Federsteifigkeit und damit einen steileren Anstieg der Druckrampe zur Folge hat, siehe Strecke E-F in Fig.3. Durch die mit steigendem Kupplungsdruck zunehmende Verschiebung des Modulationskolbens 22 in Richtung des Regelkolbens 21 und die damit steigende Federkraft wird der Regelkolben 21 gegen seinen Anschlag 26 gedrückt, so dass der Querschnitt zwischen 19 und 37 wie in der Ausgangslage voll geöffnet ist, wodurch der Kupplungsdruck sich an den Systemdruck angleicht und der Schaltvorgang beendet ist. Diese Stellung der beiden Kolben 21 und 22 des Drucksteuerventils im eingelegten Gang wird als zweite Ausgangslage definiert.

Eine weitere Schaltung neben dem Einlegen aus Neutral ist der Kupplungswechsel, wie er beispielsweise bei einer Reversierung der Fahrtrichtung abläuft. Hierzu wird aus der zweiten Ausgangslage heraus, in welcher der Kupplungszylinder 8 druckbeaufschlagt ist, das Magnetventil 32 durchgeschaltet, d. h. Leitung 48 und 49 sind verbunden, und das Magnetventil 31 in die entgegen gesetzte Stellung gebracht, wodurch die Leitung 47 entlüftet und Leitung 49 druckbeaufschlagt wird. Hierdurch wird der Kupplungskolben 50 nach rechts über die Neutralposition in eine zweite Kupplungswahlposition verschoben, in welcher über den Anschluss 40 und die Leitung 43 der Kupplungszylinder 7 druckbeaufschlagt wird. Der Kupplungszylinder 8 wird entlüftet. Bei der Schaltbewegung des Kupplungskolbens 50 wird die Rückmeldeleitung 35 in der Neutralposition entlüftet, wodurch auch der Druck im Raum 29 über dem Modulationskolben 22 abgebaut wird. Das Federpaket 59 drückt nun den Modulationskolben 22 an seinen stirnseitigen Anschlag 27 zurück, wobei das Rückschlagventil 54 die Entleerung von Raum 29 erleichtert und so das Drucksteuerventil 20 in die, zur Druckmodulation notwendige, erste Ausgangslage bringt.

Eine Verbesserung des Schnellbefüllvorganges ergibt sich in der Erfindung dadurch, dass zur Regelrückführung der Druck nicht direkt nach dem Regelventil 21 abgegriffen wird, wie beispielsweise am Anschluss 37, sondern am Ausgang des Kupplungsventils 30 an den Anschlüssen 35, 40 und 41, bzw. in den Leitungen 43 oder 44. Dieser Druck, der als Kupplungsdruck bezeichnet wird, ist gegenüber dem Druck am Ausgang des Drucksteuerventils 20 zeitlich in seinem Anstieg verzögert und aufgrund der Strömungsverluste niedriger. Diese direktere Abnahme des Drucks nahe dem jeweils zu befüllenden Kupplungszylinder 7oder 8 bewirkt, dass der Druck erst dann auf den niedrigen Anfangswert (Fig. 3, Punkt D) der Modulationsphase zurückgeregelt wird, wenn die Befüllung des Kupplungszylinders nahezu abgeschlossen ist. In Verbindung mit einem als Verzögerungskolben wirksamen Modulationskolben 22, der ab diesem Druckwert den Kupplungsdruck auf den Druckraum 28 des Regelventils 21 zuschaltet, ergibt sich dann eine optimale Schnellbefüllung, die vor dem Zuschaltpunkt (Punkt C in Fig. 3) den Ölstrom ungedrosselt lässt, und ab dem Zuschaltpunkt auf den Anlegedruck (Punkt D in Fig. 3) regelt.

Der Anlegedruck entspricht der Kraft der Rückstellfeder des Kupplungskolbens bezogen auf die Fläche des Kupplungskolbens. Somit ergibt sich eine schnelle Befüllung und ein sanftes Anlegen des Kupplungskolbens an das Lamellenpaket, wodurch die Kupplung schnell aber ohne Schaltstoß schließt.

### Bezugszeichen

- 1: Pumpe
- 2: Steuerungsgehäuse
- 3: Hydraulische Steuerung
- 4: Filter
- 5: Leitung 6-15
- 6: Abzweigung 4-5-48
- 7: Kupplungszylinder
- 8: Kupplungszylinder
- 9: Anschluss von 10 an 15
- 10: Systemdruckventil
- 11: Kolben von 10
- 12: Feder von 10
- 13: Sammelraum
- 14: Getriebeschmierung
- 15: Verbindungsraum 10-20 und 5
- 16: Entlüftung
- 17: Anschluss von 18 an 22
- 18: Leitung von 17 nach 28
- 19: Anschluss von 15 an 20
- 20: Drucksteuerventil
- 21: Regelkolben
- 22: Modulationskolben
- 23: Feder
- 24: Feder
- 25: Distanzstück
- 26: Anschlag von 21
- 27: Anschlag von 22
- 28: Druckraum, Stirnseite von 21
- 29: Druckraum, Stirnseite von 22
- 30: Kupplungsventil
- 31: Magnetventil für Kupplungszylinder 7
- 32: Magnetventil für Kupplungszylinder 8
- 33: Anschluss von 20 an 34
- 34: Leitung von 20 nach 30
- 35: Anschluss von 34 an 30
- 36: Leitung von 29 nach 34
- 37: Anschluss von 21 an 38
- 38: Leitung von 37 nach 39
- 39: Anschluss von 38 an 30
- 40: Ausgang aus 30 zum Kupplungszylinder 7
- 41: Ausgang aus 30 zum Kupplungszylinder 8
- 42: Steuerkante von 22
- 43: Leitung zum Kupplungszylinder 7
- 44: Leitung zum Kupplungszylinder 8
- 45: Steuerkante von 22
- 46: Druckversorgung für Magnetventil 31
- 47: Leitung von Magnetventil 31 nach 30
- 48: Druckversorgung für Magnetventil 32
- 49: Leitung von Magnetventil 32 nach 30
- 50: Kupplungsventilkolben
- 51: Steuerkante von 21
- 52: Steuerkante von 21
- 53: Rastierung
- 54: Rückschlagventil
- 55: Druckraum, Stirnseite von 11
- 56: Leitung von 9 nach 55
- 57: Steuerkante von 22
- 58: Getriebegehäuse
- 59: Federpaket, bestehend aus 23, 24 und 25
- 60: Drosselstelle in 18
- 61: Drosselstelle in 36
- 62: Steuerkante von 11
- 63: Feder
- 64: Feder
- 65: Querbohrung

- 60: Drosselstelle in 18
- 61: Drosselstelle in 36
- 62: Steuerkante von 11
- 63: Feder
- 64: Feder
- 65: Querbohrung

## Patentansprüche

1. Hydraulische Steuerungseinrichtung mit einem in einem Steuerungsgehäuse (2) angeordneten Drucksteuerventil (20) zur raschen Befüllung eines Kupplungszylinders (7, 8) und Regelung eines Druckaufbaus, bei der das Drucksteuerventil einen Regel- (21) und einen Modulationskolben (22) aufweist, die in einer konzentrischen Bohrung angeordnet sind, und durch mindestens eine Feder (23, 24) auseinandergedrückt werden, wobei beide Kolben in einer ersten Ausgangslage gegen Anschläge (26, 27) im Steuerungsgehäuse gedrückt werden und wobei zwischen einer Stirnseite (28) des Regelkolbens und einer Regelrückführung des Kupplungsdrucks eine Verzögerungseinrichtung (17, 33, 60, 61, 42, 45, 57, 23, 24, 22) angeordnet ist, **dadurch gekennzeichnet, dass** in den Modulationskolben (22) eine Steuergeometrie eingearbeitet ist, wodurch dieser zusätzlich als Verzögerungskolben wirksam ist, und
dass die Steuergeometrie durch Eindrehung von mindestens einer umlaufenden Nut in den Außendurchmesser des Modulationskolbens (22) in Form von Steuerkanten (42, 45, 57) hergestellt ist.

2. Schiffsgetriebe mit einer hydraulischen Steuerungseinrichtung nach Anspruch 1.

## Claims

1. Hydraulic control device having a pressure control valve (20) which is arranged in a control housing (2) for rapidly filling a clutch cylinder (7, 8) and regulating a pressure build-up, in the case of which hydraulic control device the pressure control valve has a regulating piston (21) and a modulation piston (22) which are arranged in a concentric bore, and are pressed apart from one another by way of at least one spring (23, 24), the two pistons being pressed against stops (26, 27) in the control housing in a first starting position, and a retardation device (17, 33, 60, 61, 42, 45, 57, 23, 24, 22) being arranged between an end side (28) of the regulating piston and a regulating return means of the clutch pressure, **characterized in that** a control geometry is machined into the modulation piston (22), as a result of which the said modulation piston (22) is additionally active as a retardation piston, and **in that** the control geometry is produced by way of turning of at least one circumferential groove into the external diameter of the modulation piston (22) in the form of control edges (42, 45, 57) .

2. Marine transmission having a hydraulic control device according to Claim 1.

## Revendications

1. Dispositif de commande hydraulique comprenant une vanne de commande de pression (20) disposée dans un boîtier de commande (2) servant au remplissage rapide d'un vérin d'accouplement (7, 8) et à la régulation d'une mise en pression, avec lequel la vanne de commande de pression possède un piston de régulation (21) et un piston de modulation (22) qui sont disposés dans un alésage concentrique et sont repoussés l'un de l'autre par au moins un ressort (23, 24), les deux pistons, dans une première position initiale, étant poussé contre des butées (26, 27) dans le boîtier de commande et un dispositif de ralentissement (17, 33, 60, 61, 42, 45, 57, 23, 24, 22) étant disposé entre un côté frontal (28) du piston de régulation et une rétroaction de régulation de la pression d'accouplement, **caractérisé en ce qu'**une géométrie de commande est usinée dans le piston de modulation (22), par le biais de laquelle celui-ci agit en plus en tant que piston de ralentissement et
**en ce que** la géométrie de commande est produite par tournage d'au moins une rainure circonférentielle dans le diamètre extérieur du piston de modulation (22) sous la forme d'arêtes de commande (42, 45, 57).

2. Boîte de transmission de navire comprenant un dispositif de commande hydraulique selon la revendication 1.
